# EUROPEAN PATENT SPECIFICATION

(11) **EP 3 977 041 B1**
(45) Date of publication and mention of the grant of the patent: **28.05.2025**
(21) Application number: 20728148.6
(22) Date of filing: 13.05.2020
(51) Int. Cl.: F41J 5/10, F41J 5/14, F41J 5/24, F41J 3/02, F41J 3/00, F41J 5/02

(54) **VIDEO REPLAY**
VIDEOWIEDERGABE
RELECTURE DE VIDÉO

(30) Priority: 29.05.2019 GB 201907552
(43) Date of publication of application: 06.04.2022
(73) Proprietor: Flight Path IP Limited, London, England N1 0NY (GB)
(72) Inventor: DALE, Jason, Guildford Surrey GU5 9BH (GB)
(74) Representative: Gill Jennings & Every LLP
(86) International application number: PCT/GB2020/051170
(87) International publication number: WO 2020/240154

(56) References cited:
- EP-A2- 2 472 466
- GB-A- 2 430 895
- GB-A- 2 542 108
- US-A1- 2018 169 531

## Description

### Technical Field

The invention relates to a method of displaying a visual replay of throws during a darts game, and a darts video replay apparatus for performing such a method. The invention also relates to a method of displaying a visual replay of throws during a shuffleboard game, and a shuffleboard video replay apparatus for performing such a method.

### Background of the Invention

The game of darts is traditionally played in a pub environment on a bristle dartboard. Each player throws three metal-tipped darts in turn, and can inspect the dartboard to determine their score according to the rules of the game. Scoring is traditionally performed manually using a chalkboard or electronic device such as a smartphone or tablet.

Shuffleboard is also traditionally played in a pub or bar environment where two players in turn throw disc shaped pucks down a table from opposing ends. The final resting position of the pucks determines the score each player is given for that particular turn. Scoring is also traditionally performed manually using a chalkboard or electronic device such as a smartphone or tablet.

GB 2542108 A discloses an automatic dartboard scoring system for scoring a game of darts. The system involves having cameras to detect an image of the dartboard with any visual disturbance of the image detected used to identify if the dart has been validly thrown, the score is then calculated based on the position of the dart on the dartboard if it is determined to be validly thrown. A similar system is disclosed in GB 2558571 for use as an automatic Shuffleboard scoring system.

Furthermore there is a game apparatus known from EP 2 472 466 A2 which comprises a target comprising a plurality of sections divided according to a predetermined principle, a camera unit comprising a first camera and a second camera, the first camera being arranged to photograph at least a part of a game participant, the second camera being arranged to photograph at least a part of the target, a memory for storing at least a part of dynamic images photographed by the first camera and the second camera, a network connection unit for transmitting the dynamic images stored in the memory to a network, and a control unit for controlling operations of the first camera and the second camera and transmission of the dynamic images. Said game apparatus further comprises a sensing unit for detecting a game operation with respect to the target, wherein the control unit stores dynamic images photographed during a predetermined time interval including a time point at which a game operation is detected by the sensing unit, in the memory.

Systems such as those disclosed in GB 2542108 A and GB 2558571 are leading to an increase in interest in both games. Particularly in darts and shuffleboard specialised bars, due to the ability to keep track of scoring in multiplayer games and with a variety of games having different rules. However, due to the multiplayer nature of these game environments, players do not necessarily always keep an eye on the game play as they socialise with the other players between turns. This can lead to players not observing important throws made by their teammates or competitors, resulting in them losing track of the game.

### Summary of Invention

According to an aspect of the invention there is provided a method performed on a computer system, for displaying video replay during a game of darts, comprising: continually acquiring throughout the game, a video image of an oche from where a player throws darts towards a dartboard; detecting that a dart has been thrown by a player from the oche and is stationary on the dartboard; determining a trigger event based on the throw of the dart; automatically determining based on the trigger event whether to display a portion of the acquired video image captured between a first predetermined time before said detection and a second predetermined time after said detection, such that the portion of the acquired video image corresponds to the detected throw; and displaying on a display the portion of the acquired video image.

The pace of play of a game of darts can vary throughout the game. Although each player throws darts in turn, it may not be easy to predict the moment when the player will step up to the oche. It may further be difficult to predict when the player at the oche will throw the dart.

Acquiring a video image continually throughout the entire game means that important events in the game are not missed. The trigger event determines that an important event has occurred that is worth being displayed to the players. This causes a portion of the video image to be displayed showing the oche before and after the trigger event, i.e. during the throw.

In this way, important events of the game can be replayed by being displayed on the visual display. By displaying the video image a predetermined time before the throw and after the throw the display can show the reaction of the player both before and after the dart has been thrown. This enables both the player making the throw and other players taking part in the game to view the event which has triggered the display of the video image.

Preferably, the displaying is carried out immediately after determining the trigger event. In this way, the displaying of the video image is carried out immediately after the player has thrown their dart or darts. In other arrangements the displaying may be at a later point in time. For instance, the displaying may be at the end of the game.

The first predetermined time before said detection may be the same as the second predetermined time after said detection. In other embodiments the first predetermined time before said detection may be different to the second predetermined time after said detection. For instance, celebrations after the dart has been thrown may go on for longer than the build up to the throw, such that the first predetermined time period is shorter than the second predetermined time period. Alternatively, the second predetermined time period may be shorter than the first predetermined time period.

The trigger event may be an important moment in the game. This means that important moments can be re-lived by the players through the video replay. The trigger event may be any of a score above a predetermined threshold, a score below a predetermined threshold, a score having a specific value, the end of the game, or the end of a player's turn.

The predetermined score may be a score determined by the game play to be significant. For instance, it may be the highest score possible for that throw, the exact score that the user is aiming to hit, or the dart hitting the bullseye. Alternatively, if the score is below a predetermined threshold this could signify that the throw is a poor or entertaining throw.

Alternatively, or in addition, the trigger may instead be when it is determined that a player has overtaken another player. In some instances, this trigger when a player has overtaken another player may be limited to when the game is in its last round. In this way, at a vital moment in the game the players are aware when they have overtaken another player. Other triggers may be specific for the game that is being played. For instance, the trigger may be the throw in the game of killer which eliminates a player. Alternatively, the trigger may be if a player in the game of killer has been eliminated on the throw of another player's third dart.

In other arrangements the trigger event may be the end of the players turn. The video replay may be played each time at the end of each players throw, such that each player can view their reaction for every throw.

The method may further comprise storing the portion of the acquired video image corresponding to the detected throw for later use.

Portions of the video image not corresponding to a detected trigger event may be discarded.

As the video image is continually detected throughout the game this will result in a large amount of video data being collected. By only storing the portion of the acquired video image corresponding to the detected throw for later use this reduces the amount of data that needs to be stored. It also means that finding the video image of the throw at a later point in time is easier, as opposed to storing the entire video image of the game. In some embodiments determining whether to store the portion of the acquired video image may be based on the trigger event.

In other arrangements the continually acquired video image of the whole game may be stored, rather than just the portion of the acquired video image corresponding to the detected throw.

The method may further comprise sending the stored portion of the acquired video image corresponding to the detected throw to an email address, or uploading it to a website.

Players may wish to relive their experience of the game that they have played. They may wish to do this at a later point in time after the game, such as when they have left the venue, in the coming days, weeks or months. This enables the player to view the video image remotely and at a later point in time at their leisure.

The players may wish to share their experience of the game on social media. The email may allow them to download the image such that it can be posted to their social media accounts. Alternatively the uploading to a website may be a social media platform where the player can interact with the content. For instance, the player may like, share, download, or repost the video image uploaded to the website. The social media platform may be any known, such as Facebook, Twitter, Instagram or any other social media platform.

Preferably, the display is located at at least the same height as the dartboard. This means that the display is elevated at a height that is easily viewed by players throughout the venue in which the dartboard is housed. At this height the display is at the same eye level as the players throwing the dart and the players standing around the dartboard. This means that the display may easily catch their attention.

Preferably, the method further comprises switching the display from displaying a score of the game to displaying the portion of the acquired video image.

In this way the display is configured to display the score of the game. This may be the overall score of the game. It may also be the score of the player's current turn. This reduces the amount of hardware required as a single display can show both the video replay and the scoreboard. In other arrangements the display may be separate to the scoreboard. For instance, the scoreboard may be located above, below, or to the side of the display. In other arrangements the display may still display the score whilst showing the portion of the acquired video image. For instance, the display may be a split screen display showing the video image on one portion of the display and the score on another portion of the display.

In other embodiments rather than detecting that the dart is stationary on the dartboard, the detection of the throw may be due to a detection of a moving phase of the dart. In this way, there is detection of a dart in the air as it is thrown. This means that the throw of the dart is still detected even if a dart does not hit the dartboard through a misjudged or poor throw.. The detection may also require a detection of the stationary phase of the dart as well as the moving phase. The detection of the moving phase and/or stationary phase may be through cameras or motion sensors.

In other embodiments the detecting may be a detection of an impact of the dart on the dartboard.

The method may further comprise continually acquiring throughout the game a video image of the dartboard; displaying on the display, a portion of the acquired video image of the dartboard captured a third predetermined time before said detection and a fourth predetermined time after said detection, such that the portion of the acquired video image of the dartboard corresponds to the detected throw.

This enables both the video image of the player at the oche and the video image of the dartboard to be shown at the same time. Providing both the player's build up and reaction to the throw and a view of the darts impacting the dartboard.

The video image of the dartboard may be displayed in split screen along with the video image of the oche. The third predetermined time before detection may be the same first predetermined time. The fourth predetermined time may be the same as the second predetermined time. In other arrangements the first, second, third and fourth predetermined times may be the same as each other.

Alternatively, the third predetermined time when displaying the video image of the dartboard may be shorter than first predetermined time. This is because before the dart has been thrown there is no new activity at the dartboard to show. Whereas, the video of the oche may be shown before the dart is thrown to show the build-up of the players at the oche before the throw.

In addition, the fourth predetermined time when displaying the video image of the dartboard may be shorter than the second predetermined time. This is because after the dart has been thrown and is stationary on the board there is no further new activity at the dartboard to show. Whereas, the video of the oche may be displayed to show the celebrations of the player which may last for a longer time period.

In other arrangements, the portion of the video image of the dartboard may be displayed first with the portion of the video image of the oche shown after or vice versa.

The method may further comprise displaying a visual alert to indicate the displaying of the portion of the acquired video image.

This alert helps to provide the players and spectators with an indication that a trigger event has occurred and that the portion of the acquired video image is to be displayed. This helps draw attention to the event so that the players and spectators do not miss the video replay of the throw. The visual alert may involve flashing lights, and/or multiple lights of different colours.

The method may further comprise linking the display to one or more additional displays each additional display associated with a further dartboard, such that said displaying involves displaying the acquired video image at each of the linked displays.

The gameplay may involve play between players on multiple dartboards at multiple oches. By linking the displays together a trigger event from one dartboard can be displayed on the display of each of the linked displays. This can further add a competitive element between the linked dartboards as players at neighbouring linked dartboards are kept aware of the play that is taking place on the linked displays which they may not usually be aware of.

According to a further aspect there is provided a darts video replay apparatus, comprising: a dartboard; at least one video camera configured to continually acquire a video image of an oche from where a player throws darts throughout the game; a processor configured to detect that a dart has been thrown by a player from the oche and is stationary on the dartboard, determine a trigger event based on the throw of the dart and automatically determine based on the trigger event whether to display a portion of the acquired video image captured between a first predetermined time before said detection and a second predetermined time after said detection, such that the portion of the acquired video image corresponds to the detected throw; and a display configured to display the portion of the acquired video image.

Preferably, the darts video replay apparatus may further comprise a memory for storing the portion of the acquired video image corresponding to the detected throw.

The darts video replay apparatus may comprise a further video camera configured to continually acquire a video image of the dartboard throughout the game, such that a portion of the acquired video image of the dartboard captured between a third predetermined time before said detection and a fourth predetermined time after said detection can be displayed on the display.

According to a further aspect there is provided a system of darts video replay apparatuses comprising a plurality of dart video replay apparatuses of the above aspect.

The system of darts video replay apparatuses may be linked, such that the display of each darts replay apparatus are controllable to display the same video images.

According to a further aspect of the invention there is provided a method of displaying video replay during a game of shuffleboard played on a shuffleboard table, comprising: continually acquiring throughout the game, a video image of a throwing end of the shuffleboard table from where a player throws pucks towards a scoring end of the shuffleboard table; detecting that a puck has been thrown by a player from the throwing end and is stationary on the shuffleboard table; determining a trigger event based on the throw of the puck; automatically determining based on the trigger event whether to display a portion of the acquired video image captured between a first predetermined time before said detection and a second predetermined time after said detection, such that the portion of the acquired video image corresponds to the detected throw; and displaying on a display the portion of the acquired video image.

The pace of play of a game of shuffleboard can vary throughout the game. Although each player throws pucks in turn, it may not be easy to predict the moment when the player will step up to the throwing end. It may further be difficult to predict when the player at the throwing end will throw the puck.

Acquiring a video image continually throughout the entire game means that important events in the game are not missed. The trigger event determines that an important event has occurred that is worth being displayed to the players. This causes a portion of the video image to be displayed showing the throwing end before and after the trigger event, i.e. during the throw.

In this way, important events of the game can be replayed by being displayed on the visual display. By displaying the video image a predetermined time before the throw and after the throw the display can show the reaction of the player both before and after the puck has been thrown. This enables both the player making the throw and other players taking part in the game to view the event which has triggered the display of the video image.

Preferably, the displaying is carried out immediately after determining the trigger event. In this way, the displaying of the video image is carried out immediately after the player has thrown their puck or pucks. In other arrangements the displaying may be at a later point in time. For instance, the displaying may be at the end of the game.

The first predetermined time before said detection may be the same as the second predetermined time after said detection. In other embodiments the first predetermined time before said detection may be different to the second predetermined time after said detection. For instance, celebrations after the puck has been thrown may go on for longer than the build up to the throw, such that the first predetermined time period is shorter than the second predetermined time period. Alternatively, the second predetermined time period may be shorter than the first predetermined time period.

The trigger event may be an important moment in the game. This means that important moments can be re-lived by the players through the video replay. The trigger event may be any of a score above a predetermined threshold, a score below a predetermined threshold, a score having a specific value, the end of the game, or the end of a player's turn.

. The predetermined score may be a score determined by the game play to be significant. For instance, it may be the highest score possible for that throw, the exact score that the user is aiming to score, or the puck being at a particular point on the table. Alternatively, if the score is below a predetermined threshold this could signify that the throw is a poor or entertaining throw.

Alternatively, or in addition, the trigger may instead be when it is determined that a player's score has overtaken another player's score. In some instances, this trigger when a player has overtaken another player may be limited to when the game is in its last round. In this way, at a vital moment in the game the players are aware when they have overtaken another player. Other triggers may be specific for the game that is being played.

In other arrangements the trigger event may be the end of the players turn. The video replay may be played each time at the end of each players throw, such that each player can view their reaction for every throw.

The method may further comprise storing the portion of the acquired video image corresponding to the detected throw for later use.

Portions of the video image not corresponding to a detected trigger event may be discarded.

As the video image is continually detected throughout the game this will result in a large amount of video data being collected. By only storing the portion of the acquired video image corresponding to the detected throw for later use this reduces the amount of data that needs to be stored. It also means that finding the video image of the throw at a later point in time is easier, as opposed to storing the entire video image of the game. In some embodiments determining whether to store the portion of the acquired video image may be based on the trigger event.

In other arrangements the continually acquired video image of the whole game may be stored, rather than just the portion of the acquired video image corresponding to the detected throw.

The method may further comprise sending the stored portion of the acquired video image corresponding to the detected throw to an email address, or uploading it to a website.

Players may wish to relive their experience of the game that they have played. They may wish to do this at a later point in time after the game, such as when they have left the venue, in the coming days, weeks or months. This enables the player to view the video image remotely and at a later point in time at their leisure.

The players may wish to share their experience of the game on social media. The email may allow them to download the image such that it can be posted to their social media accounts. Alternatively the uploading to a website may be a social media platform where the player can interact with the content. For instance, the player may like, share, download, or repost the video image uploaded to the website. The social media platform may be any known, such as Facebook, Twitter, Instagram or any other social media platform.

Preferably, the display is located above the shuffleboard table. This may be at the scoring end of the shuffleboard table. This means that the display is elevated at a height that is easily viewed by players throughout the venue in which the shuffleboard is housed. At this height the display is at the same eye level as the players throwing the pucks and the players standing around the shuffleboard table. This means that the display may easily catch their attention.

Preferably, the method further comprises switching the display from displaying a score of the game to displaying the portion of the acquired video image.

In this way the display is configured to display the score of the game. This may be the overall score of the game. It may also be the score of the player's current turn. This reduces the amount of hardware required as a single display can show both the video replay and the scoreboard. In other arrangements the display may be separate to the scoreboard. For instance, the scoreboard may be located above, below, or to the side of the display. In other arrangements the display may still display the score whilst showing the portion of the acquired video image. For instance, the display may be a split screen display showing the video image on one portion of the display and the score on another portion of the display.

In other embodiments rather than detecting that the puck is stationary on the shuffleboard table, the detection of the throw may be due to a detection of a moving phase of the puck. In this way, there is detection of a puck moving along a throwing surface of the shuffleboard table as it is thrown. This means that the puck is detected even if it does not end up on the shuffleboard after the throw. Though a misjudged or poor throw the throw of the puck is still detected. The detection may also require a detection of the stationary phase of the puck as well as the moving phase. The detection of the moving phase and/or stationary phase may be through cameras or motion sensors.

The method may further comprise continually acquiring throughout the game a video image of the scoring end of the shuffleboard table; displaying on the display, a portion of the acquired video image of the scoring end of the shuffleboard table captured a third predetermined time before said detection and a fourth predetermined time after said detection, such that the portion of the acquired video image of the scoring end of the shuffleboard table corresponds to the detected throw.

This enables both the video image of the player at the throwing end and the video image of the scoring end to be shown at the same time. Providing both the player's build up and reaction to the throw and a view of the pucks when they are located at the scoring end.

The video image of the scoring end of the shuffleboard may be displayed in split screen along with the video image of the throwing end of the shuffleboard table. The third predetermined time before detection may be the same first predetermined time. The fourth predetermined time may be the same as the second predetermined time. In other arrangements the first, second, third and fourth predetermined times may be the same as each other.

Alternatively, the third predetermined time when displaying the video image of the scoring end may be shorter than first predetermined time. This is because before the puck has been thrown there is no new activity at the scoring end to show. Whereas, the video of the throwing end may be shown before the puck is thrown to show the build-up of the players at the throwing end before the throw.

In addition, the fourth predetermined time when displaying the video image of the scoring end may be shorter than second predetermined time. This is because after the puck has been thrown and is stationary on the shuffleboard table there is no further new activity at the scoring end to show. Whereas, the video of the throwing end may be shown to show the celebrations of the player which may continue after the puck is stationary.

In other arrangements, the portion of the video image of the scoring end may be displayed first with the portion of the video image of the throwing end shown after or vice versa.

The method may further comprise displaying a visual alert to indicate the displaying of the portion of the acquired video image.

This alert helps to provide the other players and spectators with an indication that a trigger event has occurred and that the portion of the acquired video image is to be displayed. This helps draw attention to the event so that the players and spectators do not miss the replay of the throw. The visual alert may involve flashing lights, and/or multiple lights of different colours.

The method may further comprise linking the display to one or more additional displays each additional display associated with a further shuffleboard, such that said displaying involves displaying the acquired video image at each of the linked displays.

The game play may involve play between players on multiple shuffleboards. By linking the displays together a trigger event from one shuffleboard can be displayed on the display on each of the linked displays. This can further add a competitive element between the linked shuffleboards as players at neighbouring linked shuffleboards are kept aware of the play that is taking place on the linked displays which they may not usually be aware of.

According to a further aspect there is provided a shuffleboard video replay apparatus, comprising: a shuffleboard; at least one video camera configured to continually acquire a video image of a throwing end of the shuffleboard table from where a player throws pucks towards a scoring end of the shuffleboard table; a processor configured to detect that a puck has been thrown by a player from the throwing end and is stationary on the shuffleboard table, determine a trigger event based on the throw of the puck and automatically determine based on the trigger event whether to display a portion of the acquired video image captured between a first predetermined time before said detection and a second predetermined time after said detection, such that the portion of the acquired video image corresponds to the detected throw; and a display configured to display the portion of the acquired video image.

Preferably, the shuffleboard video replay apparatus may further comprise a memory for storing the portion of the acquired video image corresponding to the detected throw.

The shuffleboard video replay apparatus may comprise a further video camera configured to continually acquire a video image of the scoring end of the shuffleboard throughout the game, such that a portion of the acquired video image of the scoring end captured between a third predetermined time before said detection and a fourth predetermined time after said detection can be displayed on the display.

According to a further aspect there is provided a system of shuffleboard video replay apparatuses comprising a plurality of shuffleboard video replay apparatuses of the above aspect.

The system of shuffleboard video replay apparatuses may be linked, such that the display of each shuffleboard replay apparatus are controllable to display the same video images.

### Brief Description of the Drawings

Figure 1 is a front view of a dartboard system in an embodiment of the present invention;
Figure 2 is a top view of the dartboard system shown in Figure 1;
Figure 3 is a flow diagram showing the steps taken in a method for displaying video replay during a game of darts in an embodiment of the invention;
Figure 4 is a side view of a shuffleboard system in an embodiment of the present invention;
Figure 5 is a top view of the shuffleboard system shown in Figure 4;
Figure 6 is a flow diagram showing the steps taken in a method for displaying video replay during a game of shuffleboard in an embodiment of the invention; and
Figure 7 is a schematic diagram of a computer system that can be configured to perform the methods shown in Figure 3 and 6.

### Detailed Description

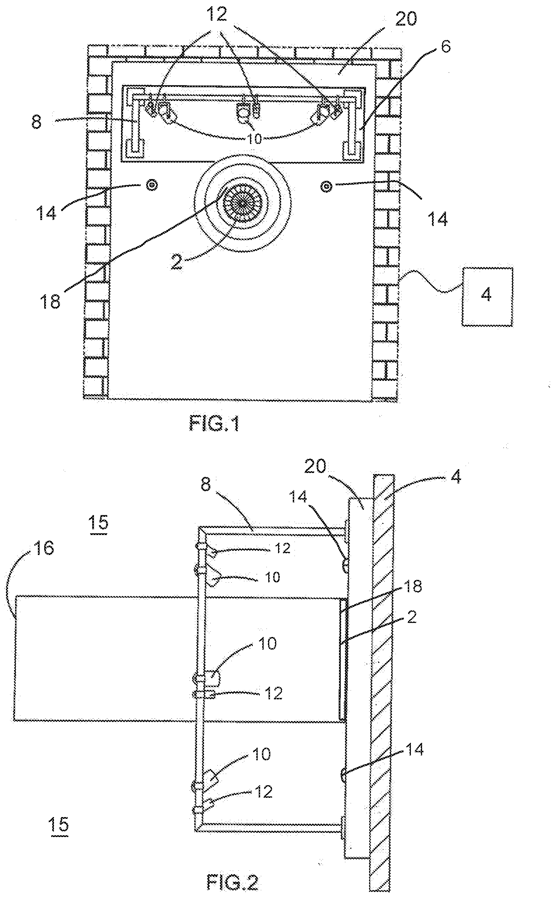

As shown in Figures 1 and 2 a dartboard 2 is mounted on a wall 4. Mounted on the wall above the dartboard 2 is a GUI display 6. As can be seen the GUI display 6 is arranged parallel to the wall 4. However, in other embodiments the GUI display 6 may be positioned at an angle that is not parallel to the wall 4, such as tilted to face one of the viewing areas 15 where spectators stand.

A gantry 8 is provided above the dartboard 2 which supports three spotlights 10 and three cameras 12, all of which point to the dartboard 2. Two cameras 14 are mounted on wall 4, the two cameras 14 pointing towards the oche 16 from where the player throws darts.

The oche 16 (or throwing line) is provided on the floor. The spot lights 10 and the cameras 12 on the gantry are provided at a position between the oche 16 and the dartboard 2.

LED strip lights 18 are provided in a ring around the dartboard 2. Some of the LED strip lights are raised above the dartboard 2 to illuminate its surface effectively during play. The LED strip lights include various LED strip lights of different colours. In conventional play only the white LED strip light may be lit up. However, one or more of the various different colour strip lights may be lit up depending on what is being displayed on the display in order to attract the players and spectators to view the display.

A protective screen 20 is provided on the wall 4 to cushion the darts that miss the dartboard 2. The LED strip lights 18 are also shielded by a lip on the screen 20. This prevents damage to the LED strip lights 18 by darts. In addition, it shields the LED strip lights 18 from a player at the oche 16 to avoid any distractions. The dartboard 2 and the LED strip lights 18 are recessed from the screen 20.

The cameras 14 mounted on the wall are positioned far enough away from the dartboard 2 that they are not likely to be hit by darts that are thrown. In addition they are also protected by being behind a transparent reinforced screen.

Although not shown in Figures 1 and 2 a computer including one or more processors is connected to the cameras 12, 14 for processing the video images. In addition, the GUI display 6 is connected to the computer for displaying results and the video images captured by the cameras to the players.

The spot lights 10 are provided for illuminating the darts that are in-flight between the oche 16 and the dartboard 2. Darts that are in-flight can be imaged by the cameras 12 on the gantry 8 for a brief period before they strike the dartboard 2 and while they settle into a final positon on the dartboard 2. Successful detection of darts being stationary on the dartboard 2 can be used as a determination that a dart has been thrown. The determination of a score can be detected as a trigger event, which causes a video replay image of the throw being shown on the GUI display 6.

The spot lights 10 can also improve illumination of the dartboard 2, especially in central areas, so that the cameras 12 can capture the image the darts on its surface. This helps the computer accurately determine the position of the dart and also provides sufficient lighting for the video image used as the video replay of the dartboard. In addition, the combined illumination of the LED light strips 18 and the spot lights 10 minimises the shadowing that could otherwise introduce errors when the positon of a dart is determined.

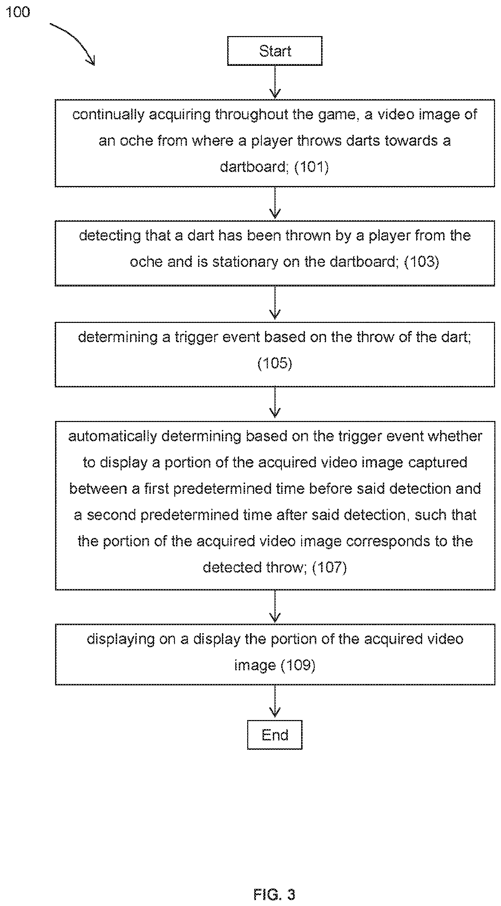

Figure 3 is a flow diagram showing a sequence of steps undertaken in a method 100 for displaying video replay during a game of darts.

At step 101 a video image of the oche is continually acquired throughout the game.

This video image is acquired using the cameras 14 that face the oche 16. As shown in Figure 1 and 2 there are two cameras 14. This enables two different perspective views to be acquired of the oche 16. These video images may be combined to form a single video image with a wide range. Alternatively, the video image from each camera 14 may be acquired and processed separately.

Step 103 involves detecting that a dart has been thrown by a player from the oche 16 and is stationary on the dartboard 2. This is detected by the cameras 12 that are facing towards the dartboard 2, which detect the presence of the dart stationary on the dartboard 2.

Step 105 involves determining a trigger event based on the throw of the dart. The trigger event is the occurrence of a particular event in the game. For instance, a particular score may be achieved that is considered a trigger event.

The scoring of the game of darts may be determined using the camera system in a similar way to as described in GB 2542108 A. However, alternative scoring systems may be implemented.

Step 107 involves automatically determining based on the trigger event whether to display a portion of the acquired video image captured between a first predetermined time before said detection and a second predetermined time after said detection, such that the portion of the acquired video image corresponds to the detected throw.

Step 109 involves displaying the portion of the acquired video image on the display 6.

The first predetermined time before the detection is selected such that the video image shows the player at the oche 16 before the dart has been thrown. The second predetermined time after the detection is selected such that the video image shows the player's celebration after the dart has been thrown.

The step of displaying enables a video replay which shows the player preparing to throw the dart, the player throwing the dart, the dart hitting the dartboard, and the player after the dart has hit the dartboard to show any celebrations or the player's reaction. These videos are captured by the cameras 14 which face the oche.

The display 6 can also show a video replay of the dartboard 2. This video image of the dartboard 2 is obtained from the cameras 12 that are facing the dartboard 2. This can be in the form of a split screen, with a portion of the display showing the dartboard 2 and the other portion of the display showing the player at the oche 16. In the video replay the dartboard 2 may be shown throughout the whole of the video replay at the same time as the oche 16. Alternately, the video replay may only show the dartboard 2 showing the moment when the darts hit the dartboard 2, with the video replay shown representing before and after this moment only showing the player at the oche 16.

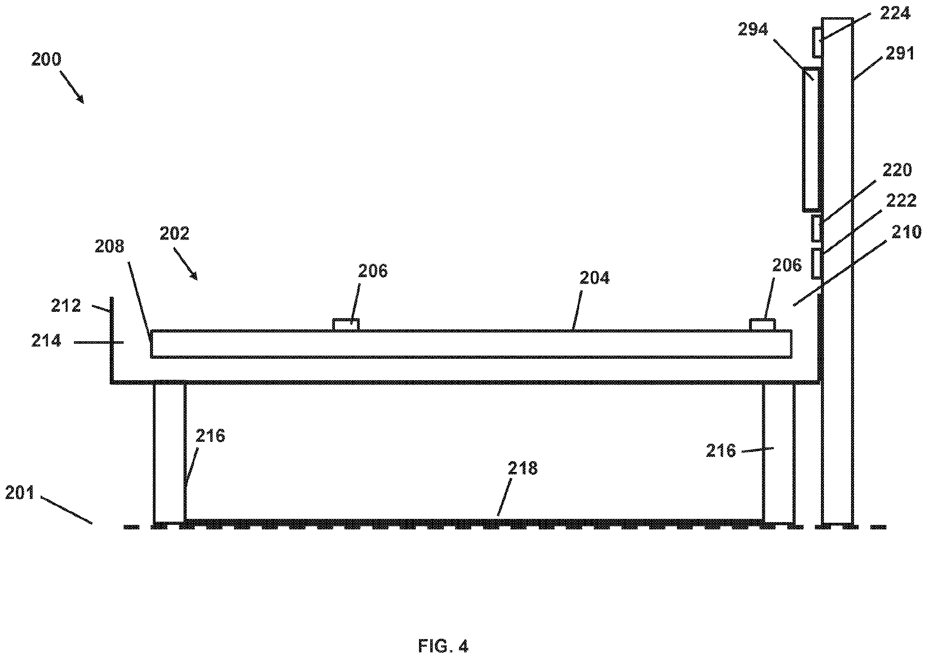

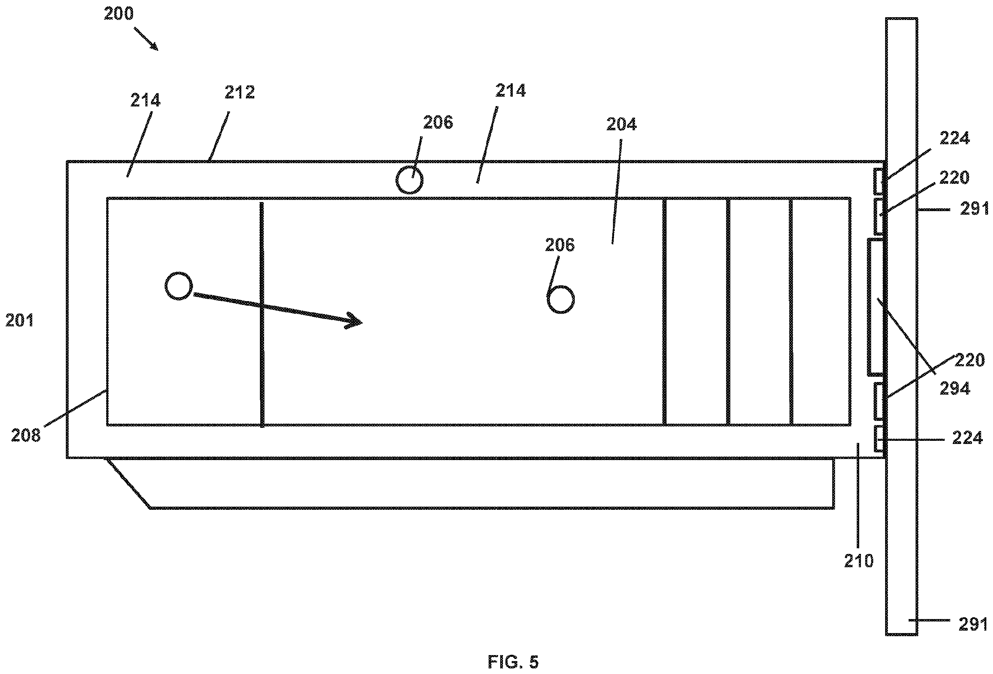

As shown in Figures 4 and 5 a shuffleboard apparatus 200 includes a shuffleboard table 202. The shuffleboard table 202 has a sliding surface 204 on which a puck 206 can be thrown. The sliding surface 204 has a single throwing end 208 and a single scoring end 210. Surrounding the sliding surface 204 is a box 212 which extends around the perimeter of the sliding surface 204 creating a well 214 between the sliding surface 204 and the box 212. Figure 4 shows a cross sectional view such that the side of the box 212 is removed so that the well 214 is visible.

The shuffleboard apparatus is supported by two supports 216 from the floor 218. Although it cannot be seen from the Figures, the supports 216 extend across the width of the sliding surface 204. However, it can be understood that any arrangement of supports 216 could be used.

The shuffleboard table extends from wall 291. The wall shown in the present embodiment is the wall of the building in which the shuffleboard table is housed. Figures 4 and 5 show only a portion of the wall for illustrative purposes. The scoring end 210 of the shuffleboard table abuts the wall, with the outer portion of the box 212 in direct contact with the wall 291. The box 212 at the throwing end 208 of the shuffleboard table 202 is not in contact with the wall.

The scoring end 210 of the shuffleboard table 200 is not attached to the wall in the embodiment shown in Figures 4 and 5, it is just located against the wall. In other embodiments the scoring end 208 of the shuffleboard table 202 may be attached to the wall 291. The attachment may be removable or may be permanent. For instance, the table may be removably clipped onto a corresponding attachment on the wall. Alternatively, the shuffleboard table may be attached to the wall through any of screws, nails or adhesives.

A playing area 201 is located at the throwing end 208 of the sliding surface 204. A viewing area 293 is positioned to the side of the sliding surface 204, between the throwing end 208 and the scoring end 210.

Located on the wall 291 elevated above the scoring end 210 is a GUI display 294. The GUI display 294 displays the scores for the shuffleboard table 200. As can be seen the GUI display 294 is arranged parallel to the wall. However, in other embodiments the GUI display 294 may be positioned at an angle that is not parallel to the wall 291, such as tilted to face the viewing area 293.

Two cameras 220 are mounted on the wall 291 that are pointed towards the throwing end 208 of the shuffleboard table. The cameras 220 are for capturing the video image of the action at the throwing end 208 of the shuffleboard table. This is in an analogous way to that described for cameras 14 when capturing the video image of the oche for the darts system described above.

Two further cameras 222 are also mounted on the wall 291 that are pointed towards the sliding surface 204. These cameras 222 are for capturing the movement of the puck 206 when it is thrown down the sliding surface 204. The cameras 222 are also used for scoring as described in patent application GB 2558571.

The cameras 220 and 222 may alternatively be mounted on a gantry as shown in the darts system in Figure 1, or attached to the celling.

Two lights 224 are located above and to the side of the display 294 located on the wall 291. The lights 224 are configured to flash when a video replay is being displayed on the display 291.

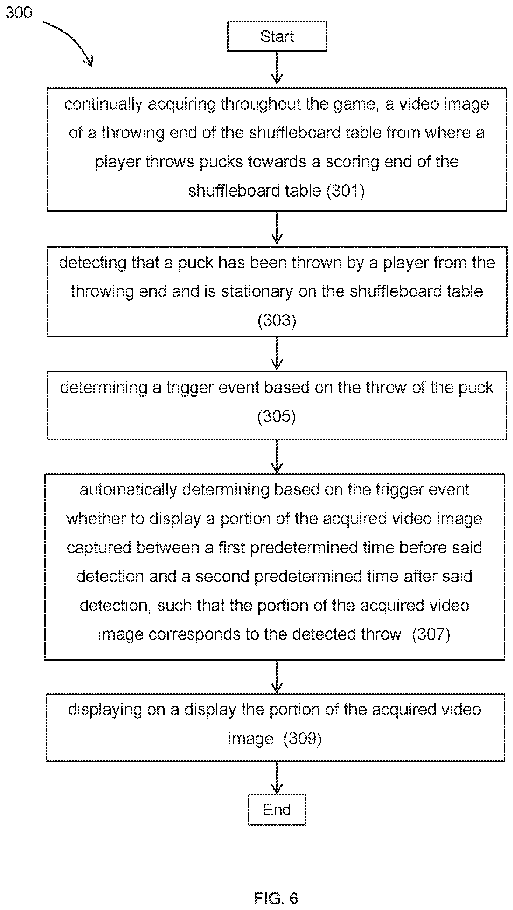

Figure 6 is a flow diagram showing a sequence of steps undertaken in a method 300 for displaying video replay during a game of shuffleboard. At step 301 a video image of a throwing end 208 of the shuffleboard table from where a player throws pucks towards a scoring end 210 of the shuffleboard table is continually acquired throughout the game.

This video image is acquired using the cameras 220 that face the throwing end 308 of the shuffleboard table. As shown in Figure 4 and 5 there are two cameras 220 that are directed at the throwing end 208 spaced below but either side of the display 294. This enables two different perspective views to be acquired of the throwing end 208. These video images may be combined to form a single video image with a wide range. Alternatively, the video image from each camera 220 may be acquired and processed separately.

Step 303 involves detecting that a puck has been thrown by a player from the throwing end 208 and is stationary on the shuffleboard table. This is detected by the cameras 222 that are facing towards the playing surface, which detect the presence of the puck stationary on the shuffleboard table.

Step 305 involves determining a trigger event based on the throw of the puck. The trigger event is the occurrence of a particular event in the game. For instance, a particular score may be achieved that is considered a trigger event.

Step 307 involves automatically determining based on the trigger event whether to display a portion of the acquired video image captured between a first predetermined time before said detection and a second predetermined time after said detection, such that the portion of the acquired video image corresponds to the detected throw.

Step 309 involves displaying the portion of the acquired video image on the display 294.

The first predetermined time before the detection is selected such that the video image shows the player at the throwing end 208 before the puck has been thrown. The second predetermined time after the detection is selected such that the video image shows the player's celebration after the puck has been thrown.

The step of displaying enables a video replay which shows the player preparing to throw the puck, the player throwing the puck, the puck stationary on the sliding surface, and the player after the puck has been thrown to show any celebrations or the player's reaction. These videos are captured by the cameras 220 which face the throwing end 208.

The display 394 can also show a video replay of the sliding surface 204. This video image of the sliding surface 204 is obtained from the cameras 222 that are facing the sliding surface 204. This can be in the form of a split screen, with a portion of the display 294 showing the sliding surface 204 and the other portion of the display 294 showing the player at the throwing end 208. In the video replay the sliding surface 204 may be shown throughout the whole of the video replay at the same time as the throwing end 208. Alternately, the video replay may only show the sliding surface 204 showing the moment when the puck becomes stationary, with the video replay shown representing before and after this moment only showing the player at the throwing end 208.

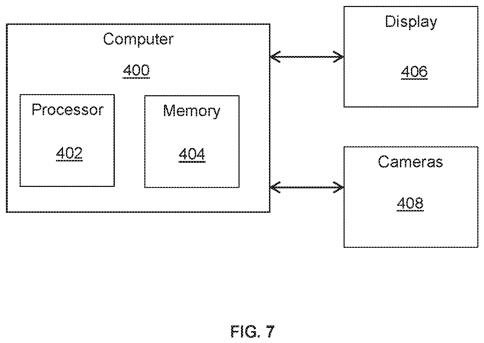

Figure 7 shows the computer system 400 which controls the video replay apparatus for the darts and shuffleboard systems as described above. The computer system 400 has a processor 402 for controlling the replay system and a memory 404 for storing the video images that are generated. The computer system 600 is in communication with the GUI display 406 that displays the video replay and the scores of the game. The computer system 400 is also in communication with cameras 408 which collect the video images for the video replay and scoring of the game.

The connections between the computer 400 and the display 406 and cameras 408 may be wired connections. Alternatively, they may be wireless connections. For instance, Wi-Fi, Bluetooth, or other wireless connection types.

As described above for both the darts and the shuffleboard systems, the video images are continually recorded by the cameras that face the oche 16 and the throwing end 208 of the shuffleboard table throughout the games of darts and shuffleboard. These video images may then be stored for later use. This may be the video images of the entire game. However, this may result in a lot of data being stored that will not be required. Alternatively, only the portion of the video image that is replayed in the video replay, after being detected as being related to a trigger event, may be stored. The remaining portion of the video image data that is not shown as a video replay may be discarded. Alternatively the video image data of the throw that caused the trigger event may also be discarded after it has been shown on the display.

However, the video image of the video replay shown on the display may be stored for use at a later point in time. For, instance the video image may be sent to the players. This may be sent in an electronic message such as email or SMS. Alternatively it may be uploaded to social media. This enables the players to re-live the game at a later point in time and/or show and share it with their friends or family.

The darts apparatus as shown in Figures 1 and 2 and the shuffleboard apparatus as shown in Figure 4 and 5 may be located in a themed bar with a plurality of dartboards and shuffleboard tables. The displays of each of the neighbouring shuffleboard tables and dartboards may be linked. This may be through wireless connectivity or a wired connection as authorised above. The computer system 400 shown in Figure 7 may control each of the displays such that the same video replay can be displayed on each of the displays of the linked dartboards/shuffleboard apparatuses. When starting a multiplayer game, where linked play on neighbouring dartboards or shuffleboard tables is required, one of the players selects at a computer terminal located at the dartboard or shuffleboard apparatus that linked play is required. This then causes the computer system to set up a link between the dartboards or shuffleboard apparatuses.

The invention also includes numerous modifications and variations to the above-described methods and apparatus.

In other arrangements there may be one or more lights that light-up or flash to indicate that a replay is being shown. These lights may be mounted on the wall that the dartboard and shuffleboards are attached to. In other arrangements the dartboard or shuffleboards themselves may be visually lit. For instance, the dartboard may be backlit. The sliding surface of the shuffleboard table may also be backlit.

The lights 222 behind the shuffleboard table and LED strip lights 18 around the dartboard indicate to the players that the video replay apparatus is displaying the video replay. In other arrangements various configurations of lighting may be used for both the darts and shuffleboard arrangements. For instance, the lights 222 may be an LED strip light. The lights for the shuffleboard system may be located around the display. Alternatively, the shuffleboard table may be lit up. For the darts arrangement the lights may be lights embedded in the wall as in the shuffleboard set up.

Alternatively, or in addition, a sound effect may be played when the video replay is being shown. Alternatively, the visual indication (light or sound) may be immediately prior to the video replay being shown.

In other arrangements, the camera 14 mounted on the wall that obtain the image of the oche may instead be located on the gantry 8 the same as the cameras 12 which point to the dartboard 2. In addition, the shuffleboard apparatus may also have the cameras 220 222 located on a gantry.

In other arrangements the GUI display may not be mounted on the wall. The GUI display may be mounted on a stand. Alternatively, the GUI display may be attached to the ceiling and/or a gantry.

For the darts arrangement the GUI display may alternatively be located either side of the dartboard.

Although video cameras are described, cameras that obtain a static photograph may be implemented. These could capture a photograph and based on a trigger event this photograph may be displayed on the display.

The systems described above implement the scoring system described in GB 2542108 A and GB 2558571. However, any type of scoring system may be implemented such that the trigger event is automatically determined to trigger the video replay to be displayed.

In addition to the video replay being shown on the display an animation or a video clip may be shown that is specific for that particular event. For instance, in the darts games when a score of 180 is scored an animation specific for that event may be shown.

## Claims

1. A method performed on a computer system, for displaying video replay during a game of darts, comprising:
continually acquiring (101) throughout the game, a video image of an oche (16) from where a player throws darts towards a dartboard (2);
detecting (103) that a dart has been thrown by a player from the oche and is stationary on the dartboard;
determining (105) a trigger event based on the throw of the dart;
automatically determining (107) based on the trigger event whether to display a portion of the acquired video image captured between a first predetermined time before said detection and a second predetermined time after said detection, such that the portion of the acquired video image corresponds to the detected throw; and
displaying (109) on a display (6) the portion of the acquired video image.

2. The method of claim 1, wherein the trigger event is any of a score above a predetermined threshold, a score below a predetermined threshold, a score having a specific value, the end of the game, or the end of a player's turn.

3. The method of any preceding claim, further comprising:
storing the portion of the acquired video image corresponding to the detected throw for later use; and optionally
sending the stored portion of the acquired video image corresponding to the detected throw to an email address, or uploading it to a website.

4. The method of any preceding claim, further comprising switching the display from displaying a score of the game to displaying the portion of the acquired video image.

5. The method of any preceding claim, further comprising:
continually acquiring throughout the game a video image of the dartboard;
displaying on the display, a portion of the acquired video image of the dartboard captured a third predetermined time before said detection and a fourth predetermined time after said detection, such that the portion of the acquired video image of the dartboard corresponds to the detected throw.

6. The method of any preceding claim, further comprising:
displaying a visual alert to indicate the displaying of the portion of the acquired video image, preferably wherein the visual alert involves flashing lights, and/or multiple lights of different colours.

7. The method of any preceding claim, further comprising:
linking the display to one or more additional displays each additional display associated with a further dartboard, such that said displaying involves displaying the acquired video image at each of the linked displays.

8. A darts video replay apparatus, comprising:
a dartboard (2);
at least one video camera (12, 408) configured to continually acquire a video image of an oche (16) from where a player throws darts throughout the game;
a processor (402) configured to detect that a dart has been thrown by a player from the oche and is stationary on the dartboard, determine a trigger event based on the throw of the dart and automatically determine based on the trigger event whether to display a portion of the acquired video image captured between a first predetermined time before said detection and a second predetermined time after said detection, such that the portion of the acquired video image corresponds to the detected throw; and
a display (6, 406) configured to display the portion of the acquired video image.

9. The darts video replay apparatus of claim 8, further comprising a memory (404) for storing the portion of the acquired video image corresponding to the detected throw.

10. The darts video replay apparatus of any of claims 8 or 9, comprising a further video camera configured to continually acquire a video image of the dartboard throughout the game, such that a portion of the acquired video image of the dartboard captured between a third predetermined time before said detection and a fourth predetermined time after said detection can be displayed on the display.

11. A system of darts video replay apparatuses comprising a plurality of dart video replay apparatuses of any of claims 8 to 10, preferably wherein the plurality of darts replay apparatuses are linked, such that the display of each darts replay apparatus are controllable to display the same video images.

12. A method performed on a computer system, for displaying video replay during a game of shuffleboard played on a shuffleboard table (202), comprising:
continually acquiring (301) throughout the game, a video image of a throwing end of the shuffleboard table from where a player throws pucks towards a scoring end (210) of the shuffleboard table;
detecting (303) that a puck (206) has been thrown by a player from the throwing end (208) and is stationary on the shuffleboard table;
determining (305) a trigger event based on the throw of the puck;
automatically determining (307) based on the trigger event whether to display a portion of the acquired video image captured between a first predetermined time before said detection and a second predetermined time after said detection, such that the portion of the acquired video image corresponds to the detected throw; and
displaying (309) on a display (294) the portion of the acquired video image.

13. The method of claim 12, wherein the trigger event is any of a score above a predetermined threshold, a score below a predetermined threshold, a score having a specific value, the end of the game, or the end of a player's turn.

14. The method of any of claims 12 or 13, further comprising:
displaying a visual alert to indicate the displaying of the portion of the acquired video image.

15. A shuffleboard video replay apparatus, comprising:
a shuffleboard (202);
at least one video camera (220, 222, 408) configured to continually acquire a video image of a throwing end of the shuffleboard table from where a player throws pucks towards a scoring end (210) of the shuffleboard table;
a processor (402) configured to detect that a puck (206) has been thrown by a player from the throwing end (208) and is stationary on the shuffleboard table, determine a trigger event based on the throw of the puck and automatically determine based on the trigger event whether to display a portion of the acquired video image captured between a first predetermined time before said detection and a second predetermined time after said detection, such that the portion of the acquired video image corresponds to the detected throw; and
a display (294, 406) configured to display the portion of the acquired video image.

## Patentansprüche

1. Verfahren, das auf einem Computersystem durchgeführt wird, zum Anzeigen einer Videowiedergabe während eines Dartspiels, umfassend:
kontinuierliches Erfassen (101), während des gesamten Spiels, eines Videobildes einer Wurflinie (16), von der aus ein Spieler Dartpfeile auf eine Dartscheibe (2) wirft;
Erkennen (103), dass ein Dartpfeil von einem Spieler von der Wurflinie aus geworfen wurde und auf der Dartscheibe stationär ist;
Bestimmen (105) eines Auslöseereignisses auf Basis des Wurfs des Dartpfeils;
automatisches Bestimmen (107), auf Basis des Auslöseereignisses, ob ein Abschnitt des erfassten Videobildes, der zwischen einem ersten vorbestimmten Zeitpunkt vor der Erkennung und einem zweiten vorbestimmten Zeitpunkt nach der Erkennung erfasst wurde, derart angezeigt werden soll, dass der Abschnitt des erfassten Videobildes dem erkannten Wurf entspricht; und
Anzeigen (109) des Abschnitts des erfassten Videobildes auf einer Anzeige (6).

2. Verfahren nach Anspruch 1, wobei das Auslöseereignis eines von einem Punktergebnis über einer vorbestimmten Schwelle, einem Punktergebnis unter einer vorbestimmten Schwelle, einem Punktergebnis, das einen spezifischen Wert aufweist, das Ende des Spiels oder das Ende des Zuges eines Spielers ist.

3. Verfahren nach einem vorstehenden Anspruch, weiter umfassend:
Speichern des Abschnitts des erfassten Videobildes, der dem erkannten Wurf entspricht, zur späteren Verwendung; und gegebenenfalls
Senden des gespeicherten Abschnitts des erfassten Videobildes, der dem erkannten Wurf entspricht, an eine E-Mail-Adresse oder Hochladen desselben auf eine Website.

4. Verfahren nach einem vorstehenden Anspruch, das weiter das Umschalten der Anzeige vom Anzeigen eines Punktergebnisses des Spiels zum Anzeigen des Abschnitts des erfassten Videobildes umfasst.

5. Verfahren nach einem vorstehenden Anspruch, weiter umfassend:
kontinuierliches Erfassen eines Videobildes der Dartscheibe während des gesamten Spiels;
Anzeigen eines Abschnitts des erfassten Videobildes der Dartscheibe, der zu einem dritten vorbestimmten Zeitpunkt vor der Erkennung und einem vierten vorbestimmten Zeitpunkt nach der Erkennung erfasst wurde, derart auf der Anzeige, dass der Abschnitt des erfassten Videobildes der Dartscheibe dem erkannten Wurf entspricht.

6. Verfahren nach einem vorstehenden Anspruch, weiter umfassend:
Anzeigen eines visuellen Alarms, um das Anzeigen des Abschnitts des erfassten Videobildes anzugeben, bevorzugt wobei der visuelle Alarm Blinklichter und/oder mehrere Lichter unterschiedlicher Farben beinhaltet.

7. Verfahren nach einem vorstehenden Anspruch, weiter umfassend:
Verknüpfen der Anzeige mit einer oder mehreren zusätzlichen Anzeigen, wobei jede zusätzliche Anzeige einer weiteren Dartscheibe zugeordnet ist, derart, dass das Anzeigen das Anzeigen des erfassten Videobildes auf jeder der verknüpften Anzeigen beinhaltet.

8. Dartvideo-Wiedergabeeinrichtung, umfassend:
eine Dartscheibe (2);
mindestens eine Videokamera (12, 408), die so konfiguriert ist, dass sie während des gesamten Spiels kontinuierlich ein Videobild einer Wurflinie (16), von der aus ein Spieler Dartpfeile wirft, erfasst;
einen Prozessor (402), der so konfiguriert ist, dass er erkennt, dass ein Dartpfeil von einem Spieler von der Wurflinie aus geworfen wurde und auf der Dartscheibe stationär ist, auf Basis des Wurfs des Dartpfeils ein Auslöseereignis bestimmt und auf Basis des Auslöseereignisses automatisch bestimmt, ob ein Abschnitt des erfassten Videobildes, der zwischen einem ersten vorbestimmten Zeitpunkt vor der Erkennung und einem zweiten vorbestimmten Zeitpunkt nach der Erkennung erfasst wurde, derart angezeigt werden soll, dass der Abschnitt des erfassten Videobildes dem erkannten Wurf entspricht; und
eine Anzeige (6, 406), die so konfiguriert ist, dass sie den Abschnitt des erfassten Videobildes anzeigt.

9. Dartvideo-Wiedergabeeinrichtung nach Anspruch 8, die weiter einen Speicher (404) zum Speichern des Abschnitts des erfassten Videobildes, der dem erkannten Wurf entspricht, umfasst.

10. Dartvideo-Wiedergabeeinrichtung nach einem der Ansprüche 8 oder 9, die eine weitere Videokamera umfasst, die so konfiguriert ist, dass sie während des gesamten Spiels kontinuierlich ein Videobild der Dartscheibe derart erfasst, dass ein Abschnitt des erfassten Videobildes der Dartscheibe, der zwischen einem dritten vorbestimmten Zeitpunkt vor der Erkennung und einem vierten vorbestimmten Zeitpunkt nach der Erkennung erfasst wurde, auf der Anzeige angezeigt werden kann.

11. System aus Dartvideo-Wiedergabeeinrichtungen, das eine Vielzahl von Dartvideo-Wiedergabeeinrichtungen nach einem der Ansprüche 8 bis 10 umfasst, bevorzugt wobei die Vielzahl von Dartwiedergabeeinrichtungen derart verknüpft sind, dass die Anzeige jeder Dartwiedergabeeinrichtung so gesteuert werden kann, dass sie dieselben Videobilder anzeigen.

12. Verfahren, das auf einem Computersystem durchgeführt wird, zum Anzeigen einer Videowiedergabe während eines Shuffleboard-Spiels, das auf einem Shuffleboard-Tisch (202) gespielt wird, umfassend:
kontinuierliches Erfassen (301), während des gesamten Spiels, eines Videobildes eines Wurfendes des Shuffleboard-Tisches, von dem aus ein Spieler Pucks auf ein Punktende (210) des Shuffleboard-Tisches wirft;
Erkennen (303), dass ein Puck (206) von einem Spieler vom Wurfende (208) aus geworfen wurde und auf dem Shuffleboard-Tisch stationär ist;
Bestimmen (305) eines Auslöseereignisses auf Basis des Wurfs des Pucks;
automatisches Bestimmen (307), auf Basis des Auslöseereignisses, ob ein Abschnitt des erfassten Videobildes, der zwischen einem ersten vorbestimmten Zeitpunkt vor der Erkennung und einem zweiten vorbestimmten Zeitpunkt nach der Erkennung erfasst wurde, derart angezeigt werden soll, dass der Abschnitt des erfassten Videobildes dem erkannten Wurf entspricht; und
Anzeigen (309) des Abschnitts des erfassten Videobildes auf einer Anzeige (294).

13. Verfahren nach Anspruch 12, wobei das Auslöseereignis eines von einem Punktergebnis über einer vorbestimmten Schwelle, einem Punktergebnis unter einer vorbestimmten Schwelle, einem Punktergebnis, das einen spezifischen Wert aufweist, das Ende des Spiels oder das Ende des Zuges eines Spielers ist.

14. Verfahren nach einem der Ansprüche 12 oder 13, weiter umfassend:
Anzeigen eines visuellen Alarms, um das Anzeigen des Abschnitts des erfassten Videobildes anzugeben.

15. Shuffleboardvideo-Wiedergabeeinrichtung, umfassend:
ein Shuffleboard (202);
mindestens eine Videokamera (220, 222, 408), die so konfiguriert ist, dass sie kontinuierlich ein Videobild eines Wurfendes des Shuffleboard-Tisches, von dem aus ein Spieler Pucks auf ein Punkteende (210) des Shuffleboard-Tisches wirft, erfasst;
einen Prozessor (402), der so konfiguriert ist, dass er erkennt, dass ein Puck (206) von einem Spieler vom Wurfende (208) aus geworfen wurde und auf dem Shuffleboard-Tisch stationär ist, auf Basis des Wurfs des Pucks ein Auslöseereignis bestimmt und auf Basis des Auslöseereignisses automatisch bestimmt, ob ein Abschnitt des erfassten Videobildes, der zwischen einem ersten vorbestimmten Zeitpunkt vor der Erkennung und einem zweiten vorbestimmten Zeitpunkt nach der Erkennung erfasst wurde, derart angezeigt werden soll, dass der Abschnitt des erfassten Videobildes dem erkannten Wurf entspricht; und
eine Anzeige (294, 406), die so konfiguriert ist, dass sie den Abschnitt des erfassten Videobildes anzeigt.

## Revendications

1. Procédé réalisé sur un système informatique, pour afficher une relecture vidéo pendant une partie de fléchettes, comprenant :
l'acquisition en continu (101) tout au long du jeu, d'une image vidéo d'un pas de tir (16) à partir duquel un joueur lance des fléchettes vers une cible (2) ;
la détection (103) qu'une fléchette a été lancée par un joueur depuis le pas de tir et est stationnaire sur la cible ;
la détermination (105) d'un événement déclencheur basé sur le lancer de la fléchette ;
le fait de déterminer automatiquement (107), sur la base de l'événement déclencheur, s'il faut afficher une partie de l'image vidéo acquise capturée entre un premier moment prédéterminé avant ladite détection et un deuxième moment prédéterminé après ladite détection, de telle sorte que la partie de l'image vidéo acquise corresponde au lancer détecté ; et
l'affichage (109), sur un afficheur (6), de la partie de l'image vidéo acquise.

2. Procédé selon la revendication 1, dans lequel l'événement déclencheur est l'un quelconque parmi un score supérieur à un seuil prédéterminé, un score inférieur à un seuil prédéterminé, un score présentant une valeur spécifique, la fin du jeu ou la fin du tour d'un joueur.

3. Procédé selon une quelconque revendication précédente, comprenant en outre :
le stockage de la partie de l'image vidéo acquise correspondant au lancer détecté pour une utilisation ultérieure ; et facultativement
l'envoi de la partie stockée de l'image vidéo acquise correspondant au lancer détecté à une adresse de courrier électronique, ou le téléchargement de celle-ci sur un site Web.

4. Procédé selon une quelconque revendication précédente, comprenant en outre la commutation de l'afficheur d'un affichage d'un score du jeu vers un affichage de la partie de l'image vidéo acquise.

5. Procédé selon une quelconque revendication précédente, comprenant en outre :
l'acquisition en continu tout au long du jeu d'une image vidéo de la cible ;
l'affichage, sur l'afficheur, d'une partie de l'image vidéo acquise de la cible capturée entre un troisième moment prédéterminé avant ladite détection et un quatrième moment prédéterminé après ladite détection, de telle sorte que la partie de l'image vidéo acquise de la cible corresponde au lancer détecté.

6. Procédé selon une quelconque revendication précédente, comprenant en outre :
l'affichage d'une alerte visuelle pour indiquer l'affichage de la partie de l'image vidéo acquise, de préférence dans lequel l'alerte visuelle implique des lumières clignotantes et/ou de multiples lumières de différentes couleurs.

7. Procédé selon une quelconque revendication précédente, comprenant en outre :
la liaison de l'afficheur à un ou plusieurs afficheurs supplémentaires, chaque afficheur supplémentaire étant associé à une autre cible, de telle sorte que ledit affichage implique l'affichage de l'image vidéo acquise au niveau de chacun des afficheurs liés.

8. Appareil de relecture vidéo de fléchettes, comprenant :
une cible (2) ;
au moins une caméra vidéo (12, 408) configurée pour acquérir en continu une image vidéo d'un pas de tir (16) à partir duquel un joueur lance des fléchettes tout au long du jeu ;
un processeur (402) configuré pour détecter qu'une fléchette a été lancée par un joueur depuis le pas de tir et est stationnaire sur la cible, déterminer un événement déclencheur sur la base du lancer de la fléchette et déterminer automatiquement, sur la base de l'événement déclencheur, s'il faut afficher une partie de l'image vidéo acquise capturée entre un premier moment prédéterminé avant ladite détection et un deuxième moment prédéterminé après ladite détection, de telle sorte que la partie de l'image vidéo acquise corresponde au lancer détecté ; et
un afficheur (6, 406) configuré pour afficher la partie de l'image vidéo acquise.

9. Appareil de relecture vidéo de fléchettes selon la revendication 8, comprenant en outre une mémoire (404) pour stocker la partie de l'image vidéo acquise correspondant au lancer détecté.

10. Appareil de relecture vidéo de fléchettes selon l'une quelconque des revendications 8 ou 9, comprenant une autre caméra vidéo configurée pour acquérir en continu une image vidéo de la cible tout au long du jeu, de telle sorte qu'une partie de l'image vidéo acquise de la cible capturée entre un troisième moment prédéterminé avant ladite détection et un quatrième moment prédéterminé après ladite détection puisse être affichée sur l'afficheur.

11. Système d'appareils de relecture vidéo de fléchettes comprenant une pluralité d'appareils de relecture vidéo de fléchettes selon l'une quelconque des revendications 8 à 10, de préférence dans lequel la pluralité d'appareils de relecture vidéo de fléchettes sont liés, de telle sorte que l'afficheur de chaque appareil de relecture de fléchettes puisse être commandé pour afficher les mêmes images vidéo.

12. Procédé exécuté sur un système informatique, pour afficher une relecture vidéo pendant une partie de jeu de palets jouée sur une table de jeu de palets (202), comprenant :
l'acquisition en continu (301) tout au long du jeu, d'une image vidéo d'une extrémité de lancer de la table de jeu de palets à partir de laquelle un joueur lance des palets vers une extrémité de score (210) de la table de jeu de palets ;
la détection (303) qu'un palet (206) a été lancé par un joueur depuis l'extrémité de lancer (208) et est stationnaire sur la table de jeu de palets ;
la détermination (305) d'un événement déclencheur sur la base du lancer du palet ;
le fait de déterminer automatiquement (307), sur la base de l'événement déclencheur, s'il faut afficher une partie de l'image vidéo acquise capturée entre un premier moment prédéterminé avant ladite détection et un deuxième moment prédéterminé après ladite détection, de telle sorte que la partie de l'image vidéo acquise corresponde au lancer détecté ; et
l'affichage (309), sur un afficheur (294), de la partie de l'image vidéo acquise.

13. Procédé selon la revendication 12, dans lequel l'événement déclencheur est l'un quelconque parmi un score supérieur à un seuil prédéterminé, un score inférieur à un seuil prédéterminé, un score présentant une valeur spécifique, la fin du jeu ou la fin du tour d'un joueur.

14. Procédé selon l'une quelconque des revendications 12 ou 13, comprenant en outre :
l'affichage d'une alerte visuelle pour indiquer l'affichage de la partie de l'image vidéo acquise.

15. Appareil de relecture vidéo de jeu de palets, comprenant :
un jeu de palets (202) ;
au moins une caméra vidéo (220, 222, 408) configurée pour acquérir en continu une image vidéo d'une extrémité de lancer de la table de jeu de palets à partir de laquelle un joueur lance des palets vers une extrémité de score (210) de la table de jeu de palets ;
un processeur (402) configuré pour détecter qu'un palet (206) a été lancé par un joueur depuis l'extrémité de lancer (208) et est stationnaire sur la table de jeu de palets, déterminer un événement déclencheur sur la base du lancer du palet et déterminer automatiquement, sur la base de l'événement déclencheur, s'il faut afficher une partie de l'image vidéo acquise capturée entre un premier moment prédéterminé avant ladite détection et un deuxième moment prédéterminé après ladite détection, de telle sorte que la partie de l'image vidéo acquise corresponde au lancer détecté ; et
un afficheur (294, 406) configuré pour afficher la partie de l'image vidéo acquise.
